# EUROPEAN PATENT SPECIFICATION

(11) **EP 0 525 745 B1**
(45) Date of publication and mention of the grant of the patent: **11.06.1997**
(21) Application number: 92112942.5
(22) Date of filing: 29.07.1992
(51) Int. Cl.: H04N 1/00

(54) **Facsimile apparatus with telemonitoring**
Faksimilegerät mit Fernüberwachung
Dispositif de fac-similé télécontrôlé

(30) Priority: 30.07.1991 JP 190403/91; 30.07.1991 JP 190404/91; 30.07.1991 JP 190405/91; 30.07.1991 JP 190406/91
(43) Date of publication of application: 03.02.1993
(73) Proprietor: SHARP KABUSHIKI KAISHA, Osaka 545 (JP)
(72) Inventor: Fujii, Yoshiharu, Sakurai-shi, Nara-ken (JP)
(74) Representative: Müller, Frithjof E., Dipl.-Ing.

(56) References cited:
- EP-A- 0 429 048
- US-A- 4 876 606

## Description

### BACKGROUND OF THE INVENTION

### 1. Field of the Invention

The present invention relates to a facsimile apparatus according to the precharacterizing part of claim 1. Such a facsimile apparatus is known from EP-A-0 429 048.

### 2. Description of the Related Art

Facsimile apparatuses are recently increasingly capable in the type of forming images on plain paper by employing a copying process, and the rate of troubles occurring in the mechanism employing such copying process is high, and it is desired to strengthen the service organization for maintenance and control due to the necessity of periodic overhaul for maintenance of performance, and in particular quick and accurate countermeasures are urgently required in order to recover from troubles promptly.

In the conventional method of maintenance and control, generally, the facsimile apparatus itself detects its own state, and indicates the nature of trouble or coming of replacement timing of specific parts by its display or the like, or displays the nearly empty state of consumable parts (indicating the consumable parts are about to end) to tell the user, and the user recognizes the state, and if judging it necessary to call the serviceman, it is reported to the maintenance service station assigned for maintenance and control of the facsimile apparatus by telephone or other means.

Such telephone communication, however, gives rise to the following problems.
(1) The user cannot do his own work when explaining the trouble, and loses time.
(2) The user may misunderstand the trouble message, and wrong information may be transmitted to the maintenance service station.
(3) The user may not notice the trouble message if displayed, and in such a case a minor trouble may be promoted to a major trouble.
(4) The maintenance service station sends the serviceman by repairing necessary repair parts after receiving the report from the user, and prompt countermeasure is difficult.

It has hence been lately proposed to do maintenance and control in a method in which the user side facsimile apparatus detects its own operating state, converts the detected data to communication information, sends it automatically or according to the transmission request from the maintenance service station, while the maintenance service station receives the transmitted communication information, converts it, for example, into character information and prints out to recognize the operating state of the user side facsimile such a disclosed in Japanese Patent Publication JP-A-03 162 065 or European Patent Publication EP-A-0 429 048.

When executing such method of maintenance and control, in the first place, the user must install the facsimile apparatus possessing such function for transmitting the operating state. Then the serviceman goes to the office of the user to agree contract, and negotiates the contents of the maintenance contract of the facsimile apparatus with the user. Upon agreement, the serviceman manually sets the opening information for activating the function on the facsimile apparatus having the function of automatic transmission of the operating state.

The opening information includes what maintenance function should be selected, that is, what type of information is to be sent to the maintenance service station, the information about the subscribed facsimile apparatus such as the apparatus name, subscriber's name and number, and telephone number of the maintenance service station, that is, the information transmission destination.

If wrong data is registered as opening information, the automatic transmission function does not operate normally, or the opening information or information to be transmitted may leak outside.

Besides, the user cannot confirm the information transmitted to the maintenance service station, or the user may feel uneasy, not knowing whether the automatic transmission function is operating normally or not, what information is transmitted to the maintenance service station, or if information different from the contract content is transmitted or not.

The automatic transmission function may be executed easily in the apparatus preliminarily incorporating the telephone circuit network for communication such as the facsimile apparatus, but it is necessary to have an exclusive telephone circuit network preserved for execution of automatic transmission function in the case of an apparatus not requiring the telephone circuit network in ordinary operation such as the copier, and it is not economical.

The photosensitive drum deteriorates due to the mechanical elements including the cleaner and after-heat or ozone of the fixing device in every operation of copying, and the life is generally determined by the number of copied (number of times). However, since the photosensitive drum is a photo semiconductor, it is changed by aging effects and is hence limited in the usable period. For example, the photoreceptor known as 50K life photoreceptor has a life of five years. Accordingly, in the case of a user of low frequency of use, it may exceed the usable period before reaching the prescribed number of copies.

EP-A-0 429 048 discloses a known facsimile apparatus in accordance with the precharacterizing part of claim 1 and includes a trouble-type determining circuit for determining, when a trouble occurs, whether or not the type of the trouble has contents that can be handled by the users. When the trouble-type determining circuit determines that the trouble contents cannot be handled by the users, the facsimile apparatus sends the trouble contents to a facsimile unit of a maintenance and control station over a telephone line. Further, the known facsimile apparatus includes means of calculation charges corresponding to the number of printed sheets by employing a number of printed sheets counting switch. The signal of said counting switch is added sequentially by a control means so that the accumulated number of printed sheets can be calculated. The trouble information of the accumulated number of sheets is transmitted to the facsimile unit of the maintenance and control station in accordance with a request-to-send from said maintenance station.

### SUMMARY OF THE INVENTION

It is a primary object of the invention to present a facsimile apparatus capable of preventing wrong registration of opening information. Said facsimile apparatus should be capable of transmitting the output information from other electronic appliance having operation state sensing means to a control apparatus and further to present a facsimile apparatus capable of confirming the information transmitted to the control apparatus by the automatic transmission function.

It is another object of the invention to present a facsimile apparatus capable of accurately confirming the life of a photosensitive drum.

To achieve the above objects, the invention presents a facsimile apparatus according to claim 1. Depending claims 2 to 9 are specifying advantageous developments thereof.

In the invention, the control means converts the received opening information into image data and transmits it to the control device as the result of confirmation.

In an embodiment of the invention, the control means records the received opening information on recording paper by recording means.

When the opening information for activating the operating state transmitting means of the facsimile apparatus is transmitted from the control device, it is received by the receiving means. The control means activates the operating state transmitting means conforming to the received opening information. The opening information includes the terminal number such as the telephone number set in the control device as the destination of transmission of the operating state, and selection information of transmitting what type of information to the control device. In this way, the activation of the automatic transmission function of the operating state can be set and indicated from the control device. Therefore, the serviceman is not required to set the opening information manually, and the controllability is enhanced while wrong registration may be prevented. Or when changing the opening information, the trouble of dispatching the serviceman to the office of the user of the facsimile apparatus is omitted.

The received opening information is printed out on recording paper by recording means. Therefore, the user of the facsimile apparatus can easily confirm what opening information has been set.

Because according to the invention, the received opening information is converted into image data and sent to the control device by the facsimile apparatus as the result of confirmation, the operator at the control device side can immediately confirm whether the transmitted opening information is right or wrong, so that occurrence of wrong registration may be prevented.

Thus, according to the invention, the activation of the automatic transmission function of the operating state can be set and indicated from the control device. Therefore. the serviceman is not required to set the opening information manually, and the controllability is enhanced while wrong registration may be prevented. Or when changing the opening information, the trouble of dispatching the serviceman to the office of the user of the facsimile apparatus is omitted.

Further the operating state transmitting means may comprise means for receiving the output information from an electronic device having operating state detecting means for detecting and producing the own operating state, and the output information from the electronic device is transmitted to the control device.

A predetermined identification code may be set in the input means, and the operating state transmitting means transmits the output information from the electronic device, together with the identification code, to the control device.

The output information from another electronic device having operating state detecting means for detecting and delivering its own operating state may be given to the input means, and the operating state transmitting means sends the output information from the other electronic device to the control device. As a result, the operating state transmitting means of the facsimile apparatus may be effectively utilized, and it is not necessary to connect an exclusive telephone circuit network to the other electronic device, and the automatic transmission function may be realized at a relatively low cost.

Also, the output information from the other electronic device is transmitted to the control device together with an identification code. In the control device, therefore, it is easy to distinguish whether the transmission information comes from the facsimile apparatus itself, or from the other electronic device.

Thus, the output information from the other electronic device can be transmitted to the control device by the operating state transmitting means of the facsimile apparatus, so that the automatic transmission function in the other electronic apparatus may be realized at a relatively low cost.

Said control means of the facsimile apparatus according to the invention may further comprise means for converting the transmission information by the operating state transmitting means into image data, and means for feeding the image signal from the converting means to the recording means to record in recording paper.

In the invention, the recording means may execute a copy process of transferring an electrically charged image formed on a photosensitive drum on recording paper, and may comprise means for counting the number of copies for counting up by one every time one copy process is done, and
the operating state detecting means may compare the copy capacity number set on the photosensitive drum and the counting of the copy number counting means, and detect when the photosensitive drum exceeds its life.

The copy number counting means may be prevented from counting when recording the transmission information.

In the invention, the control means may force to perform recording action only once for recording the transmission information when the operating state detecting means detects that the photosensitive drum has surpassed its life.

When the recording means executes the copy process by photosensitive drum, every time the copy process is done, the number of times of copying is counted by the copy number counting means. The operating state detecting means detects that the photosensitive drum has exceeded its life time when the count of the copy number counting means has exceeded the copy capacity number set on the photosensitive drum. The information showing that the photosensitive drum exceeded the life time is transmitted to the control device by the operating state transmitting means, and is recognized by the operator at the control device side.

When recording the transmission information sent to the control device, it is not counted by the copy number counting means. That is, the recording of transmission information is done as service to the operator (user) of the facsimile apparatus, and if this recording action is counted, the number of times usable by the user is decreased. Usually, the copy capacity number is set smaller than the actual copy limit number, it does not matter particularly if counting is not done.

When it is detected that the photosensitive drum has exceeded its lifetime, the recording action is not to be done according to the principle, but actually the recording action is done only once by force in order to record the transmission information. Thus. the copy capacity number set on the photosensitive drum is set lower than the actual copy limit number, and therefore the recording action can be done. If the recording quality deteriorates, it is the recording for confirming the content, and it does not matter particularly.

Since the information transmitted to the control device is recorded on recording paper, the operator (user) of the facsimile apparatus can check if the automatic transmission function of the operating state is working normally or not, and the content of transmission may be immediately recognized.

When the recording means executes the copy process by the photosensitive drum, the number of copies is counted, and when this number exceeds a preset copy capacity number, it is detected that the photosensitive drum has exceeded its lifetime.

The facsimile apparatus according to an embodiment of the invention
further comprises number comparing means for comparing a predetermined copy capacity number and the count of the counting means, and delivering a detection signal when the counting exceeds the copy capacity number,
clock means for clocking the time of use from start of use of photosensitive drum,
period comparing means for comparing a predetermined usable period and the time of use clocked by the clock means, and delivering a detection signal when the time of use exceeds the usable period, and
means for judging that the photosensitive drum has exceeded the life when receiving at least one detection signal from the number comparing means and the period comparing means.

When the copy count exceeded the predetermined copy capacity number, or when the time of use of the photosensitive drum has exceeded the predetermined usable period, it is judged that the photosensitive drum has exceeded its lifetime. Therefore, in the case of very frequent use, the copy count is large if the period is relatively short, and even within the usable period, it is judged that the lifetime is over when exceeding the copy capacity number. Or in the case of use of low frequency of use, the copy count is small even in a relatively long period, and if within the copy capacity number, it is judged that the lifetime is over when exceeding the usable period.

Thus, regardless of the state of use, the lifetime of the photosensitive drum may be accurately recognized, and the period of replacement is known. Hence, deterioration of recording quality may be prevented.

Thus, since the life of the photosensitive drum is judged on the basis of the copy count and the time of use, the life of the photosensitive drum may be accurately known regardless of the state of use, and the replacement period is known at an adequate timing. As a result, deterioration of recording quality may be prevented.

### BRIEF DESCRIPTION OF THE DRAWINGS

Other and further objects, features, and advantages of the invention will be more explicit from the following detailed description taken with reference to the drawings wherein:
Fig. 1 is a block diagram showing a basic configuration of a facsimile apparatus 1 in an embodiment of the invention.
Fig. 2 is a sectional view showing the construction of the facsimile apparatus 1.
Fig. 3 is a flow chart explaining the operation of the facsimile apparatus 1 when opening the automatic transmission function.
Fig. 4 is a block diagram showing a structural example of a detector 17 when recognizing the life of a photosensitive drum 58 in the facsimile apparatus 1.
Fig. 5 is a flow chart explaining the operation for recognizing the life of the photosensitive drum 58.
Fig. 6 is a flow chart explaining the automatic transmission function in the facsimile apparatus.
Fig. 7 is a block diagram showing other example of use of the facsimile apparatus 1.
Fig. 8 is a flow chart explaining the other automatic transmission function of the facsimile apparatus 1.

### DETAILED DESCRIPTION OF THE PREFERRED EMBODIMENT

Now referring to the drawing, preferred embodiments of the invention are described below.

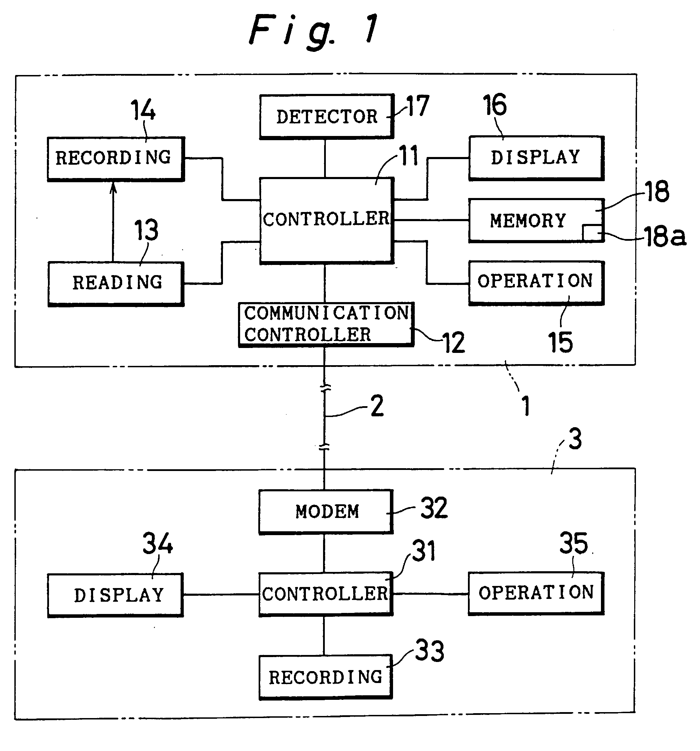

Fig. 1 is a block diagram showing a basic configuration of a facsimile apparatus 1 in an embodiment of the invention. The facsimile apparatus 1 is connected to a telephone network circuit 2, and transmits and receives image data with other facsimile apparatus, and also transmits and receives various information with a control device 3 described below through the telephone circuit network 2. The facsimile apparatus 1 executes an electrostatic copy process of forming a charged image and recording (transferring) on a recording paper.

The facsimile apparatus 1 comprises a controller 11 which is realized by a microcomputer or the like, and the controller 11 is connected with a communication controller 12, a reading part 13, a recording part 14, an operating part 15, a display part 16, a detector 17, and a memory 18. The communication controller 12, comprising an incoming detecting circuit, a modem and others, demodulates the received image data, applies to the controller 11, and modulates the image data to be transmitted and delivers to the telephone circuit network 2. The reading part 13 comprises a CCD (charge coupled device) mentioned below, lens, exposure device and others, and optically reads the document when transmitting the document, and converts into electric signals (image data) and applies to the controller 11. When copying the document, the document is exposed, and the document image is focused on the photoreceptor surface of the recording part 14.

The recording part 14 comprises photoreceptor, developing device, charger, fixing device and others, and transfers the image on the recording paper in the electrostatic copy process.

The operating part 15 comprises numeric keys, transmission key, and various function setting keys. The display part 16 is realized by liquid crystal display device or the like, and displays the input data from the operating part 15, and the operating state of the facsimile apparatus 1, such as the error information and the information showing shortage of consumable parts.

The detector 17 detects the operating state of the facsimile apparatus 1, or more specifically the abnormal state, and applies the detected operating state to the controller 11. The controller 11 comprises trouble phenomenon judging means, trouble type judging means and communication information converting means which are not shown, and these means operate according to the control from the detector 17.

The trouble phenomenon judging means judges what trouble has been detected by the detector 17. The trouble type judging means judges if the trouble judged by the trouble phenomenon judging means is of the type requiring the so-called serviceman call or not. In the case of the trouble of the type not requiring the serviceman call, it means a trouble that can be relatively easily handled by the user, such as paper jamming and shortage of recording paper. The trouble of the type requiring the serviceman call is, for example, the end of life of the photoreceptor in the recording part 14 that cannot be handled by the user.

The memory 18 comprises ROM (read-only memory) and RAM (random access memory), among others, and the ROM stores the programs for controlling the actions of the facsimile apparatus 1, and the RAM incorporates a registration region of opening information transmitted from the control device 3, and a work region used in processing action by the controller 11, among others.

The control device 3 is a device basically composed of a so-called personal computer, and it transmits and receives data with the facsimile apparatus 1 or other terminal device through the telephone circuit network 2. The control device 3 comprises a controller 31 composed of CPU (central processing unit) and others, and the controller 31 is connected with a modem 32, a recording part 33, a display part 34, and an operating part 35.

The modem 32 demodulates the received data and applies to the controller 31, and modulates the data to be transmitted given from the controller 31, and delivers to the telephone circuit network 2. The recording part 33 is realized by a thermal printer or the like, and records the image data received through the telephone circuit network 2, various received information, or the information entered through the operating part 35 in recording paper such as thermal recording paper. The display part 34 is realized by the liquid crystal display device or the like, and displays the information received through the telephone circuit network 2 and the information entered through the operating part 34. The operating part 35 comprises plural key switches such as numeric input keys, and various function setting keys for specifying the operating state of the control device 3.

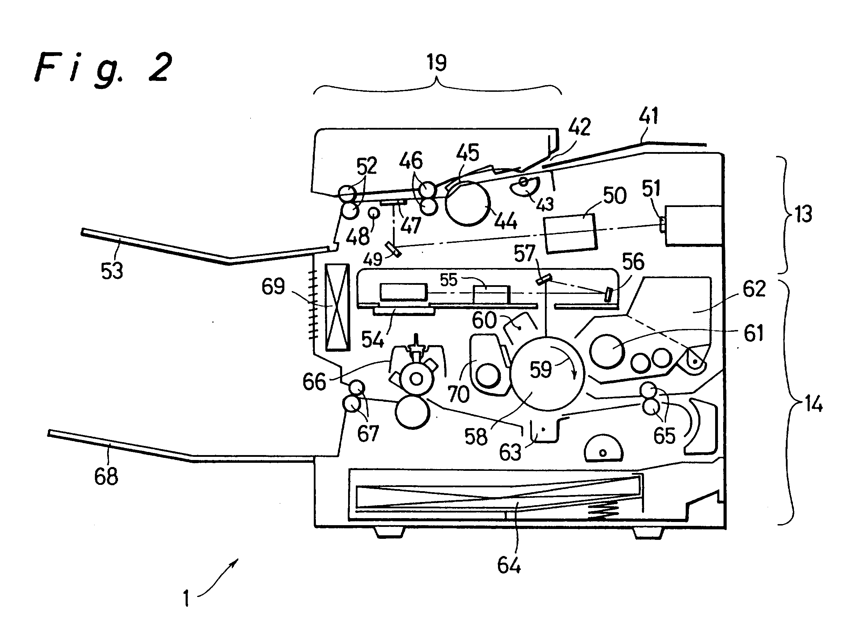

Fig. 2 is a sectional view showing the construction of the facsimile apparatus 1. The facsimile apparatus 1 is roughly divided into the reading part 13, recording part 14, and document conveying part 19. When the document 41 is inserted into a document inlet 42, setting of the document 41 is detected by a document detecting sensor 43 realized by a microswitch or the like. Later, when the copy key or transmission key is manipulated by the operator, the conveying action of the document 41 is started.

When transmitting the document, the document 41 is pressed and conveyed by a roller 44 and a pressing member 45, and is further conveyed into an exposure region in which a transparent glass 47 is installed by a pair of conveying rollers 46. In the exposure region, irradiation light from a light source 48 is emitted to the original plane of the document 41, and its reflected light enters the CCD 51 through mirror 49 and lens 50. By the CCD 51, the incident light is converted into an electric signal (image data), and is given to the controller 11. The document 41 after exposure is conveyed by a pair of discharge rollers 52, and is discharged onto a document tray 53.

At the downward side of the mirror 49 in Fig. 2, an exposure head 54 is disposed, and when copying the document 41, an electrostatic copy process is executed along with the document conveying action. The document image exposed by the exposure head 54 is focused on a photosensitive drum 58 through lens 55 and mirrors 56, 57.

The photosensitive drum 58 is rotated in the direction of arrow 59. The surface of the photosensitive drum 58 is uniformly charged by a corona charger 60. Next, the other parts than the document image are illuminated with light by the exposure head 54, and the electric charge of the illuminated area is removed, and the charge is left over in the document image area, thereby forming an electrostatic latent image. In a developing part 61, a toner composed of coloring particles charged in the reverse polarity of the electrostatic latent image is supplied from a toner cartridge 62, and it is deposited on the electrostatic latent image to form a visible image. Consequently, the recording paper is laid over this toner image, and the electric charge in the reverse polarity of the charge polarity of the toner is applied on the recording paper by a transfer device 63 from the opposite side of the photosensitive drum 58 of the recording paper, and the toner image is transferred on the recording paper by the electrostatic force.

The recording paper is stored in a recording paper cassette 64, and is conveyed in a conveying route by paper feed roller or the like not shown herein, and is supplied into a transfer region in which the transfer device 63 is installed by the paper feed roller 65.

The toner image transferred on the recording paper is fixed on the recording paper by applying heat or pressure by a fixing device. On the other hand, the latent image charge on the photosensitive drum 58 after transfer is removed by a corona discharger 70. Besides, the residual toner left over on the photosensitive drum 58 without being transferred is remove by a cleaner which is not shown. By repeating this series of process from charging to cleaning, the document image is continuously copied on the recording paper.

The recording paper on which the toner image is fixed is conveyed by a discharge roller 67, and is discharged on a discharge tray 68.

Near the exposure head 54, a cooling fan 69 is installed in order to cool off the heat of the exposure head 54.

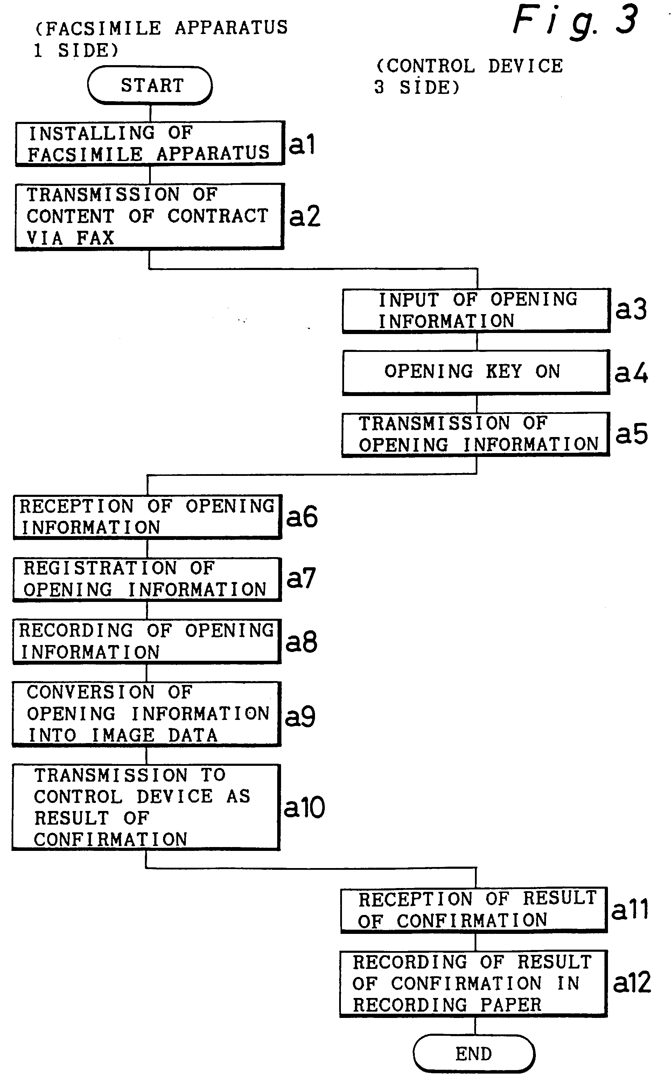

Fig. 3 is a flow chart explaining the operation of the facsimile apparatus 1. At step a1, the facsimile apparatus 1 is installed at, for example, the office of the user by the serviceman from the maintenance service station. At this moment, the content of the contract is negotiated between the user of the facsimile apparatus 1 and the serviceman. The content of the contract includes the selection of maintenance functions, that is, which information out of the automatic transmission functions of the operating state of the facsimile apparatus 1 should be transmitted to the control device 3 at the maintenance service station to request maintenance.

At step a2, the serviceman sends the content of the contract to the control device 3 through facsimile communication. The content of the contract includes, besides the selection of maintenance functions, the information about the installed facsimile apparatus 1, for example, the name of the subscriber, the model name and serial manufacturing number of the apparatus, and date of the contract.

At step a3, the opening information for opening (activating) the automatic transmission function of the facsimile apparatus 1 according to the content of the contract received through facsimile communication is entered from the operating part 35.

At step a4, when the opening key of the control device 3 is turned on, the input opening information is transmitted to the facsimile apparatus 1 at step a5.

At step a6, receiving the opening information sent from the control device 3, it is registered, at step a7, in the opening information registration region 18a in the memory 18 by the controller 11. The opening information includes the telephone number of transmission destination by automatic transmission function, contract number, and information for activating the automatic transmission function.

At step a8, the received opening information is recorded in the recording paper by the recording part 14. As a result, the serviceman can check the opening information set in the facsimile apparatus 1, that is, the content of the contract. Besides, the serviceman does not have to register the opening information by manipulating the facsimile apparatus 1, so that occurrence of wrong registration may be prevented.

At step a9, the registered opening information is converted into image data. The controller 11 converts the opening information into image data according to the character data stored in the ROM of the memory 18, on the basis of the registered opening information. The converted image data is once stored on the work region of the memory 18.

At step a10, the converted image data is sent to the control device 3 as the result of confirmation. At step all, the control device 3 receives the result of confirmation sent from the facsimile apparatus 1, and the result of confirmation is recorded in recording paper by the recording part 33 at step a12. Therefore, the operator at the control device 3 can immediately know whether the opening information sent to the facsimile apparatus 1 is correct or wrong. If the result of confirmation is wrong, input and transmission of the opening information are executed again.

In this way, the activation (opening) of the automatic transmission function of the facsimile apparatus 1 can be done by the manipulation at the control device 3 side, and manual input by the serviceman as in the prior art is not needed, so that the labor is saved while error in registration may be prevented. Besides, since the registered opening information is recorded in recording paper, the opening information (the content of the contract) may be immediately checked on the spot, so that the user may feel safe. Moreover, since the opening information is transmitted to the control device 3 as the result of confirmation, the operator at the control device 3 can immediately known whether the opening information (the content of registration) is correct or wrong, which is every convenient.

Next, referring to an example of photosensitive drum 58 installed in the facsimile apparatus 1, the detecting action of the operating state by the detector 17 is explained. The photosensitive drum 58 deteriorates after every copy due to the mechanical elements including the cleaner, and the after-heat and ozone of the fixing device 66, and therefore its life is defined by the number of copies. However, since the photosensitive drum 58 is a photoconductor and involves aging effects, and is limited in the usable period. For example, the photoreceptor called 50K life photoreceptor is limited in the life of five years.

Therefore, in the case of the user low in the frequency of use, the usable period may be over before reaching the specified number of copies. Accordingly, in the facsimile apparatus 1 of the invention, the life of the photosensitive drum 58 is determined on the basis of the number of copies and the time of use, and when exceeding the life, it is noticed to the user of the facsimile apparatus 1, and at the same time the information showing the photosensitive drum 58 has exceeded the life is automatically transmitted to the control device 3 at the maintenance service station.

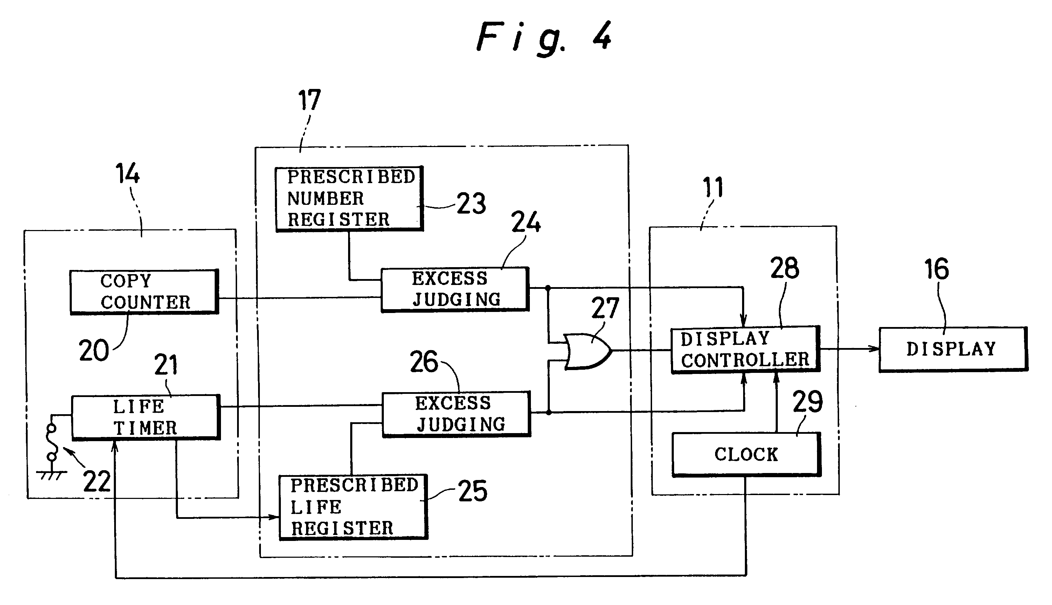

Fig. 4 is a block diagram showing the constitution necessary for checking action of the life of the photosensitive drum 58. The recording part 14 comprises a copy counter 20 for counting up upon every copying action, and a life timer circuit 21 for counting the time elapsed from the time of installation of the photosensitive drum 58. The life timer circuit 21 judges the time of installation when the fuse 22 of the photosensitive drum 58 is melted down, and starts to count the time from the initial time issued by a clock circuit 29 in the controller 11, and sums up the period equivalent to the life of the photosensitive drum 58 and the initial time, and sets the total in a prescribed life register 25 as the usable limit of the photosensitive drum 58.

The counting of the copy counter 20 is given to an excess judging circuit 24 of the detector 17. The excess judging circuit 24 compares the counting (the number of copies) of the copy counter and the output (the copy capacity number) from the prescribed number register 23, and delivers a signal when the copy number exceeds the copy capacity number. The output of the excess judging circuit 24 is given to the OR (logic sum) circuit 27 and display controller 28.

The output of the life timer circuit 21 is given to the excess judging circuit 26 of the sensing part 17. The excess judging circuit 26 compares the output (the present time) from the life timer circuit 21 and the output (the usable limit) of the prescribed life register 25, and delivers a signal when the present time exceeds the usable limit. The output of the excess judging circuit 26 is given to the OR circuit 27 and display controller 28.

The OR circuit 27 delivers a high level signal showing the photosensitive drum 58 has exceeded the life to the display controller 28, when either one of the outputs of the excess judging circuits 24, 26 becomes high level.

The display controller 28, when detecting the high level signal from the OR circuit 27, judges that the photosensitive drum 58 has exceeded the life, and it is noticed in the display part 16, and it is judged whether the life determined by the copy count or the life determined by the time of use, depending on the outputs from the excess judging circuits 24, 26, and it is also displayed in the display part 16. The display information in the display part 16 is automatically transmitted to the control device 3 by the communication controller 12.

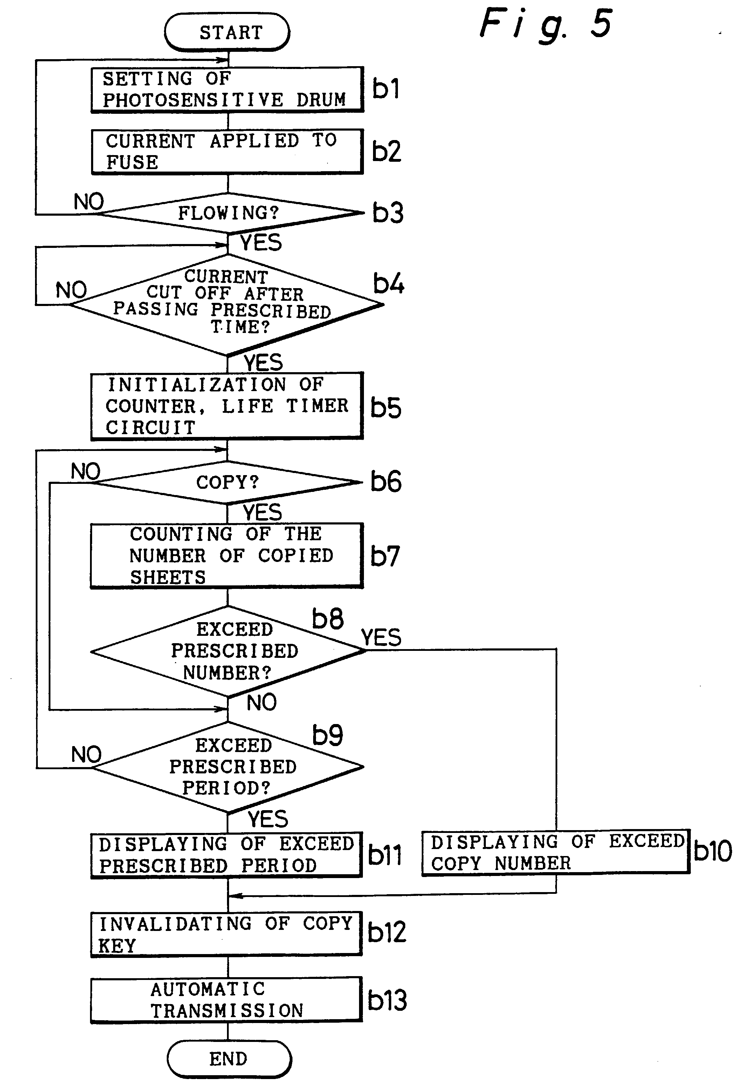

Fig. 5 is a flow chart for explaining the life judging action of the photosensitive drum 58. At step b1, the photosensitive drum 58 is set in the facsimile apparatus 1, and a current is applied to the fuse 22 at step b2.

At step b2, it is judged whether the current is flowing in the fuse 22 or not, and when current is not flowing, it is judged that the used photosensitive drum 58 has been set by mistake, and its photosensitive drum is dismounted, thereby returning to step b1 again. When a current is flowing in the fuse 22, it is confirmed at step b4 that the current is cut off after a prescribed time, and the copy counter 20 and life timer circuit 21 are initialized at step b5. At the copy counter 20, "0" is set as the initial value, while the present time is set in the life timer circuit 21 as the initial value.

At step b6, it is judged whether copy is made or not. When copy is made, at step b7, the copy counter 20 is counted up by one, and it is judged at step b8 whether the copy number has exceeded the copy capacity number in the excess judging circuit 24. If the judgment is affirmative, the operation advances to step b10, and if negative, to step b9. If no copy is made at step b6, meanwhile, the operation goes to step b9.

At step b9, it is judged whether the time of use of the photosensitive drum 58 exceeds the usable limit or not in the overlimit judging circuit 26. If the judgment is affirmative, the operation goes to step b11, and if negative, the operation returns to step b6.

At step b10, it is indicated that the photosensitive drum 58 has exceeded the life defined by the copy number, and the operation goes to step b12. At step b11, it is indicated that the photosensitive drum 58 has exceeded the life determined by the time of use, thereby advancing to step b12.

At step b12, the input of the copy key in the operating part 15 is made invalid by the controller 11.

At step b13, the information showing that the photosensitive drum 58 has exceeded the life is transmitted to the control device 3 at the maintenance service station.

In this way, the life of the photosensitive drum 58 is judged on the basis of the copy number and time of use in the facsimile apparatus 1. Therefore, even in the case relatively low in the frequency of use of the copying function, the life of the photosensitive drum 58 may be accurately determined, and the notice for urging the user to replace the photosensitive drum 58 is given at an adequate timing.

The automatic transmission function of the operating state of the facsimile apparatus 1 is explained below.

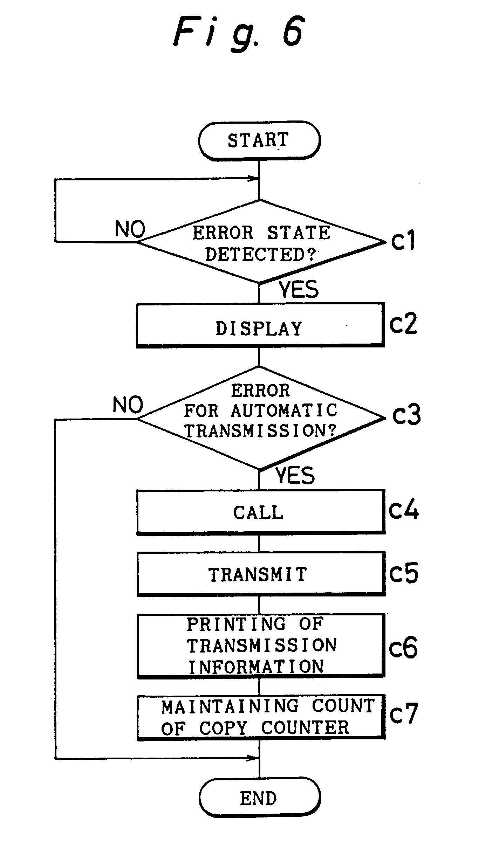

Fig. 6 is a flow chart for explaining the automatic transmission function of the facsimile apparatus 1. When the operating state (error state) is detected by the detector 17 at step c1, the detected error state is displayed in the display part 16 at step c2.

At step c3, it is judged if the error state detected by the controller 11 requires automatic transmission or not. That is, in the case of a trouble that can be handled by the user such as shortage of recording paper or paper jamming, it is not necessary to transmit automatically, and the processing ends. Or if it is necessary to replace the photosensitive drum 58 due to expiration of life, for example, it cannot be handled by the user, and the operation advances to step c4 for transmitting the detected error state.

At step c4, among the registered opening information, the telephone number of the control device 3 is read out to call, and at step c5 the detected error state, for example, the information showing it necessary to replace the photosensitive drum 58 is transmitted.

At step c6, the information transmitted to the control device 3 is recorded in recording paper by the recording part 14. Thus the user can confirm that the automatic transmission function of the facsimile apparatus 1 is working normally, and also confirm the information transmitted to the control device 3, so that the user may feel safe.

At step c7, the counting of the copy counter 20 is set in the number before recording the transmission information at step c6. This is because the automatic transmission function of error state is given as an additional service of the maintenance service station, and if the recording action of the transmission information is counted as the number of use of the photosensitive drum 58, the number of copies usable by the user is decreased. Hence, in the case of the recording of transmission information, the copy counter 20 does not count. Usually, the copy capacity number set in the prescribed number register 23 shown in Fig. 4 is set smaller than the limit copy number when copying action is completely disabled, with a certain safe margin. Therefore, if the recording action of the transmission information is not counted as the copy number, it does not affect the life of the photosensitive drum 58.

Other automatic transmission function of the facsimile apparatus 1 is explained below.

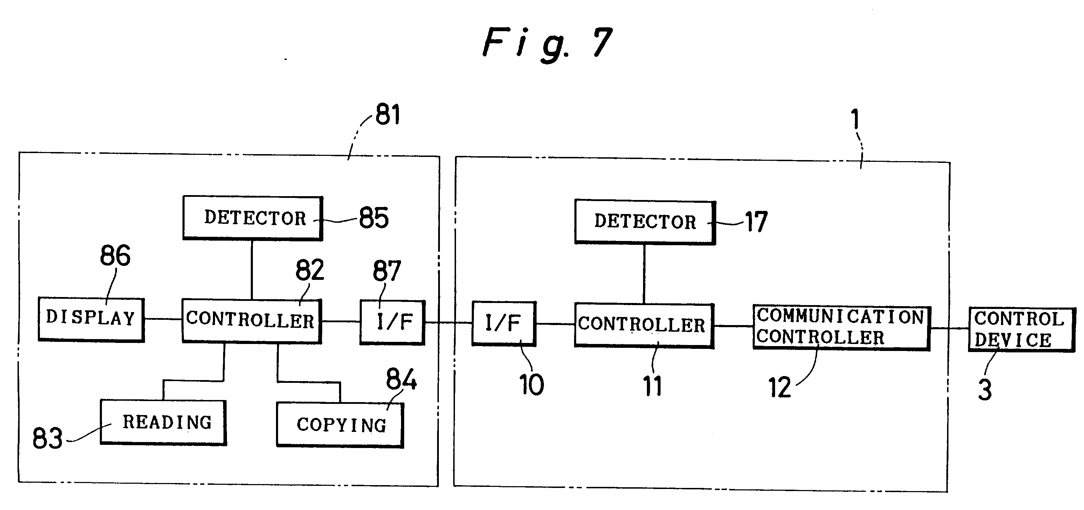

Fig. 7 is a block diagram showing the constitution of connecting a copier 81 to the facsimile apparatus 1. The copier 81 comprises a controller 82 realized by a microcomputer or the like, and is connected to a reading part 83 for optically reading the document, and a copying part 84 for copying the read document image in a recording paper to copy the document. The connecting part 82 is connected with a detector 85 for detecting the operating state (error state) of the copier 81, and the error state detected by the detector 85 is displayed in the display unit 86, and when a trouble requiring transmission to the control device 3 at the maintenance service station occurs, the information expressing the trouble is given to an interface circuit 10 of the facsimile apparatus 1 through the interface circuit 87.

In the facsimile apparatus 1, the information indicating the error state given to the interface circuit 10 and the information indicating the error state of the facsimile apparatus 1 itself detected by the detector 17 are selectively transmitted to the control device 3 through the communication controller 12. That is, the information given to the interface circuit 10 is the information given from the copier 81, and is the information that always requires transmission, so that all input information is transmitted to the control device 3.

The error state detected by the detector 17 is either the trouble that can be handled by the user or the trouble that must call for serviceman, and only when a trouble demanding the serviceman occur, the information is transmitted to the control device 3. A predetermined address is given to the interface circuit 10, and the information is transmitted to the control device 3 together with the address. The control device 3 judges if the received information is from the facsimile apparatus 1 or from the copier 81 depending on the address.

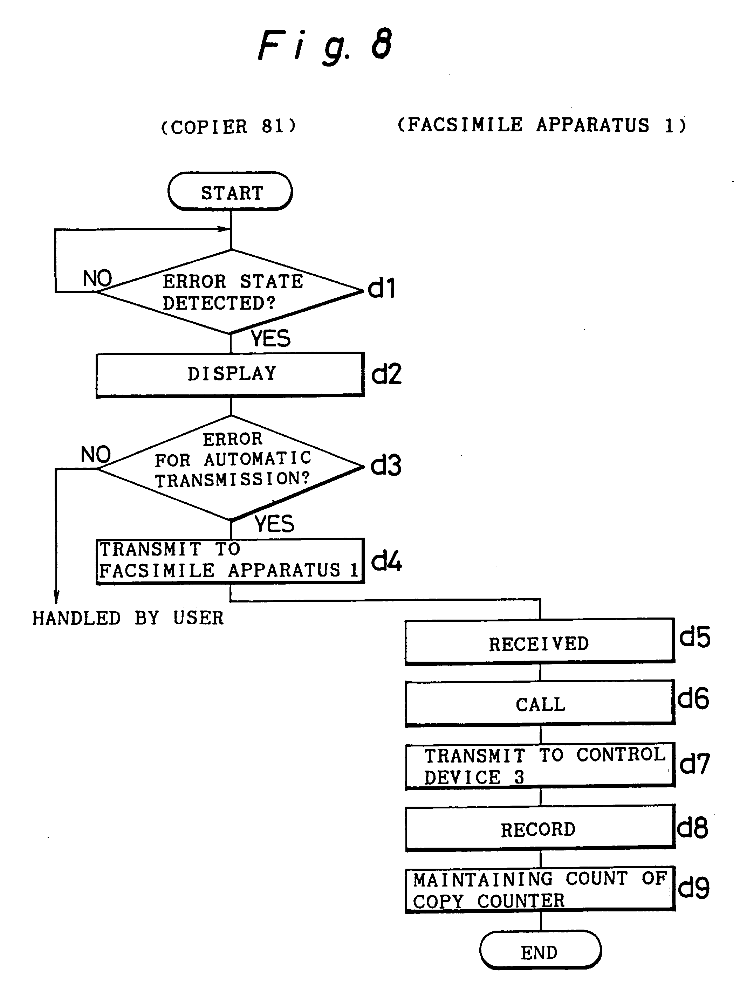

Fig. 8 is a flow chart explaining the operation of transmitting the transmission information from the copier 81 to the control device 3. At step d1, when an error state is detected by the detector 85, the detected error state is shown in the display part 86 at step d2.

At step d3, it is judged if the detected error state is a trouble to be transmitted to the control device 3 at the maintenance service station or not. In the case of the data not required to be transmitted, for example, the shortage of recording paper or paper jamming that can be handled by the user, the information is not transmitted, and the user can handle it. In the case of a trouble that must be transmitted, for example, if necessary to replace the photosensitive drum 58 due to expiration of its life, the information showing the detected error state is transmitted to the facsimile apparatus 1 at step d4.

At step d5, the information from the copier 81 is received in the facsimile apparatus 1, and the control device 3 is called at step d6, and the information is transmitted to the control device 3 at step d7. At step d8, the transmitted information is recorded in recording paper, and the counting of the copy counter 20 in the facsimile apparatus 1 is set in the value before recording the transmission information at step d9.

Meanwhile, the transmission information is the code which is set depending on the trouble, and the recorded information is also this code. Therefore, the communication charge spent for automatic communication may be kept low.

That, also in the case of the apparatus that does not require telephone circuit network 2 in usual operation, such as copier, other than the facsimile apparatus, only by connecting the facsimile apparatus 1, the automatic transmission function of operating state may be executed. Therefore, it is not necessary to install an exclusive telephone circuit network for execution of automatic transmission function, and hence automatic transmission function may be executed relatively at a low cost.

The invention may be embodied in other specific forms without departing from the essential characteristics thereof. The present embodiments are therefore to be considered in all respects as illustrative and not restrictive, the scope of the invention being indicated by the appended claims.

## Claims

1. A facsimile apparatus (1) comprising:
- facsimile communication means (12) for transmitting and receiving image data through a public circuit network (2),
- means (14) for recording image data on recording paper,
- means (13) for reading a document optically and converting the information on it into image data,
- means (17) for detecting the operating states of at least the facsimile communication means (12), recording means (14) and reading means (13), and
- operating state transmitting means (11, 12) for transmitting a detected operating state as detected by said detecting means to a remotely located control device (3) for controlling the operating state through said public circuit network (2) by transmitting the operating state to the control device (3) automatically when the operating state is detected, **characterized in that** said facsimile apparatus further comprises:
- means (12) for receiving opening information transmitted from the control device (3) including information indicative of the type of operating state information to be transmitted to said control device (3) for activating said operating state transmitting means (11, 12), and
- control means (11) for activating the operating state transmitting means (11, 12) on the basis of the received opening information, wherein said control means (11) converts the received opening information into image data and transmits it to the control device (3) as the result of confirmation.

2. The facsimile apparatus (1) as claimed in claim 1, wherein the control means (11) delivers the received opening information on the recording paper by said recording means (14).

3. The facsimile apparatus (1) according to claim 1, wherein the operating state transmitting means (11, 12) further comprises input means (10) for receiving the output information from an electronic device (81) having operating state detecting means (85) for detecting and producing the operating state of said electronic device (81), the output information from the electronic device (81) being transmitted to the control device (3).

4. The facsimile apparatus (1) as claimed in claim 3, wherein a predetermined identification code is set in the input means (10), and the operating state transmitting means (11, 13) transmits the output information from the electronic device (81), together with the identification code, to the control device (3).

5. The facsimile apparatus (1) according to claims 1 or 2, wherein said control means further comprises
- means (11, 18) for converting the transmission information to be transmitted by the operating state transmitting means (11, 12) into said image data, and
- means (11) for feeding said image data from said converting means (11, 18) to said recording means (14) to record on recording paper.

6. The facsimile apparatus (1) as claimed in claim 5, wherein the recording means (14) is executing a copy process of transferring an electrical charge image formed on a photosensitive drum (58) on recording paper and comprises counting means (20) for counting the number of copies and counting up by one every time one copy process is done, and
- the operating state detecting means (17) compares the copy capacity number set on the photosensitive drum (58) and the counting of the copy number counting means (20), and detects when the photosensitive drum (58) exceeds its life time.

7. The facsimile apparatus (1) as claimed in claim 6, wherein the copy number counting means (20) does not count when recording said converted transmission information.

8. The facsimile apparatus (1) as claimed in claims 6 or 7, wherein the control means (11) forces to perform recording action only once for recording the transmission information when the operating state detecting means (17) detects that the photosensitive drum (58) has surpassed its life time.

9. The facsimile apparatus according to one of the claims 6 to 8, wherein it further comprises
- number comparing means (24) for comparing a predetermined copy capacity number and the count of the counting means (20), and delivering a detection signal when the count exceeds the copy capacity number,
- clock means (21) for clocking the time of use from start of use of said photosensitive drum (58),
- period comparing means (26) for comparing a predetermined usable period and the time of use clocked by the clock means (21), and delivering a detection signal when the time of use exceeds the usable period, and
- means (11) for judging that the photosensitive drum (58) has exceeded its life time when receiving at least one detection signal from the number comparing means (24) and the period comparing means (26).

## Patentansprüche

1. Faksimilegerät (1) mit:
- einer Faksimilekommunikationseinrichtung (12) zum Übertragen und Empfangen von Bilddaten über ein öffentliches Schaltungsnetz (2);
- einer Einrichtung (14) zum Aufzeichnen von Bilddaten auf Aufzeichnungspapier;
- einer Einrichtung (13) zum optischen Lesen eines Dokuments und zum Umsetzen der Information auf ihm in Bilddaten;
- einer Einrichtung (17) zum Erkennen der Betriebszustände mindestens der Faksimilekommunikationseinrichtung (12), der Aufzeichnungseinrichtung (14) und der Leseeinrichtung (13); und
- einer Betriebszustand-Übertragungseinrichtung (11, 12) zum Übertragen eines erkannten Betriebszustandes, wie von der Erkennungseinrichtung erkannt, an ein entfernt aufgestelltes Steuergerät (3) zum Steuern des Betriebszustands über das öffentliche Schaltungsnetz (2) durch automatisches Übertragen des Betriebszustands an das Steuergerät (3), wenn der Betriebszustand erkannt ist;
**dadurch gekennzeichnet**, dass das Faksimilegerät ferner folgendes aufweist:
- eine Einrichtung (12) zum Empfangen von vom Steuergerät (3) übertragener Anfangsinformation, die Information enthält, die die Art der Betriebszustandsinformation anzeigt, wie sie an das Steuergerät (3) zu übertragen ist, um die Betriebszustand-Übertragungseinrichtung (11, 12) zu aktivieren; und
- eine Steuerungseinrichtung (11) zum Aktivieren der Betriebszustand-Übertragungseinrichtung (11, 12) auf Grundlage der empfangenen Anfangsinformation, wobei diese Steuerungseinrichtung (11) die empfangene Anfangsinformation in Bilddaten umsetzt und sie als Ergebnis einer Klarstellung an das Steuergerät (3) überträgt.

2. Faksimilegerät (1) nach Anspruch 1, bei dem die Steuerungseinrichtung (11) die empfangene Anfangsinformation durch die Aufzeichnungsrichtung (14) auf Aufzeichnungspapier ausgibt.

3. Faksimilegerät (1) nach Anspruch 1, bei dem die Betriebszustand-Übertragungseinrichtung (11, 12) ferner eine Eingabeeinrichtung (10) zum Empfangen der Ausgangsinformation von einem elektronischen Gerät (81) mit einer Betriebszustand-Erkennungseinrichtung (85) aufweist, um den Betriebszustand des elektronischen Geräts (81) zu erkennen und zu erzeugen, wobei die Ausgangsinformation vom elektronischen Gerät (81) an das Steuergerät (3) übertragen wird.

4. Faksimilegerät (1) nach Anspruch 3, bei dem in der Eingabeeinrichtung (10) ein vorbestimmter Kennungscode eingestellt wird und die Betriebszustand-Übertragungseinrichtung (11, 13) die Ausgangsinformation vom elektronischen Gerät (81) zusammen mit dem Kennungscode an das Steuergerät (3) überträgt.

5. Faksimilegerät (1) nach einem der Ansprüche 1 oder 2, bei dem die Steuerungseinrichtung ferner folgendes aufweist:
- eine Einrichtung (11, 18) zum Umsetzen der durch die Betriebszustand-Übertragungseinrichtung (11, 12) zu übertragenden Übertragungsinformation in die Bilddaten; und
- eine Einrichtung (11) zum Zuführen der Bilddaten von der Umsetzeinrichtung (11, 18) zur Aufzeichnungseinrichtung (14) für ein Aufzeichnen auf Aufzeichnungspapier.

6. Faksimilegerät (1) nach Anspruch 5, bei dem
- die Aufzeichnungseinrichtung (14) einen Kopierprozess des Übertragens eines auf einer photoempfindlichen Trommel (58) erzeugten elektrischen Ladungsbilds auf Aufzeichnungspapier ausführt, und sie eine Zähleinrichtung (20) zum Zählen der Anzahl von Kopien und zum Hochzählen um jeweils eins, wenn ein Kopierprozess abgeschlossen ist, aufweist; und
- die Betriebszustand-Erkennungseinrichtung (17) die für die photoempfindliche Trommel (58) eingestellte Kopienanzahlkapazität mit dem Zählwert der Kopienanzahl-Zähleinrichtung (20) vergleicht, und sie erkennt, wenn die photoempfindliche Trommel (58) ihre Lebensdauer überschreitet.

7. Faksimilegerät (1) nach Anspruch 6, bei dem die Kopienanzahl-Zähleinrichtung (20) dann nicht zählt, wenn die umgesetzte Übertragungsinformation aufgezeichnet wird.

8. Faksimilegerät (1) nach einem der Ansprüche 6 oder 7, bei dem die Steuerungseinrichtung (11) das Ausführen eines Aufzeichnungsvorgangs zum Aufzeichnen der Übertragungsinformation nur einmal erzwingt, wenn die Betriebszustand-Erkennungseinrichtung (17) erkannt hat, dass die photoempfindliche Trommel (58) ihre Lebensdauer überschritten hat.

9. Faksimilegerät nach einem der Ansprüche 6 bis 8, das ferner folgendes aufweist:
- eine Anzahlvergleichseinrichtung (24) zum Vergleichen einer vorbestimmten Kopienanzahlkapazität mit dem Zählwert der Zähleinrichtung (20) und zum Ausgeben eines Erkennungssignals, wenn der Zählwert die Kopienanzahlkapazität überschreitet;
- eine Ureinrichtung (21) zum Messen der Gebrauchsdauer ab dem Verwendungsbeginn der photoempfindlichen Trommel (58);
- eine Periodenvergleichseinrichtung (26) zum Vergleichen einer vorbestimmten Gebrauchsperiode mit der durch die Ureinrichtung (21) gemessenen Gebrauchsdauer und zum Ausgeben eines Erkennungssignals, wenn die Gebrauchsdauer die nutzbare Periode überschreitet; und
- eine Einrichtung (11) zum Entscheiden, dass die photoempfindliche Trommel (58) ihre Lebensdauer überschritten hat, wenn sie das Erkennungssignals von der Anzahlvergleichseinrichtung (24) und/oder dasjenige von der Periodenvergleichseinrichtung (26) empfängt.

## Revendications

1. Dispositif de télécopie (1) comprenant :
- un moyen de transmission par télécopie (12) pour émettre et recevoir des données d'image par l'intermédiaire d'un réseau de circuits publics (2),
- un moyen (14) pour enregistrer des données d'image sur un papier d'enregistrement,
- un moyen (13) pour lire un document de façon optique et pour convertir les informations sur celui-ci en données d'image,
- un moyen (17) pour détecter les états de fonctionnement d'au moins le moyen de transmission par télécopie (12), le moyen d'enregistrement (14) et le moyen de lecture (13), et
- des moyens d'émission d'état de fonctionnement (11, 12) pour émettre un état de fonctionnement détecté tel que celui-ci est détecté par ledit moyen de détection vers un dispositif de commande situé à distance (3) pour commander l'état de fonctionnement par l'intermédiaire dudit réseau de circuits publics (2) en émettant l'état de fonctionnement vers le dispositif de commande (3) de façon automatique lorsque l'état de fonctionnement est détecté, caractérisé en ce que
ledit dispositif de télécopie comprend en outre :
- un moyen (12) pour recevoir des informations d'ouverture émises depuis le dispositif de commande (3) comprenant des informations indiquant le type d'informations d'état de fonctionnement devant être émises vers ledit dispositif de commande (3) pour activer ledit moyen d'émission d'état de fonctionnement (11, 12), et
- un moyen de commande (11) pour activer le moyen d'émission d'état de fonctionnement (11, 12) sur la base des informations d'ouverture reçues, dans lequel ledit moyen de commande (11) convertit les informations d'ouverture reçues en données d'image et les émet vers le dispositif de commande (3) en tant que résultat de la confirmation.

2. Dispositif de télécopie (1) selon la revendication 1, dans lequel le moyen de commande (11) délivre les informations d'ouverture reçues sur le papier d'enregistrement par ledit moyen d'enregistrement (14).

3. Dispositif de télécopie (1) selon la revendication 1, dans lequel les moyens d'émission d'état de fonctionnement (11, 12) comprennent en outre un moyen d'entrée (10) pour recevoir les informations de sortie provenant d'un dispositif électronique (81) ayant un moyen de détection d'état de fonctionnement (85) pour détecter et produire l'état de fonctionnement dudit dispositif électronique (81), les informations de sortie provenant du dispositif électronique (81) étant émises vers le dispositif de commande (3).

4. Dispositif de télécopie (1) selon la revendication 3, dans lequel un code d'identification prédéterminé est fixé dans le moyen d'entrée (10), et dans lequel les moyens d'émission d'état de fonctionnement (11, 13) émettent les informations de sortie provenant du dispositif électronique (81), ainsi que le code d'identification, vers le dispositif de commande (3).

5. Dispositif de télécopie (1) selon la revendication 1 ou 2, dans lequel ledit moyen de commande comprend en outre
- des moyens (11, 18) pour convertir les informations d'émission devant être émises par le moyen d'émission d'état de fonctionnement (11, 12) dans lesdites données d'image, et
- un moyen (11) pour délivrer lesdites données d'image desdits moyens de conversion (11, 18) audit moyen d'enregistrement (14) pour les enregistrer sur le papier d'enregistrement.

6. Dispositif de télécopie (1) selon la revendication 5, dans lequel le moyen d'enregistrement (14) exécute un processus de copie de transfert d'une image de charge électrique formée sur un tambour photosensible (58) sur le papier d'enregistrement et comprend un moyen de comptage (20) pour compter le nombre de copies et pour ajouter un à chaque fois qu'un processus de copie est effectué, et
- le moyen de détection d'état de fonctionnement (17) compare le nombre de capacité de copies fixé sur le tambour photosensible (58) et le comptage du moyen de comptage du nombre de copies (20), et détecte lorsque le tambour photosensible (58) dépasse sa durée de vie.

7. Dispositif de télécopie (1) selon la revendication 6, dans lequel le moyen de comptage du nombre de copies (20) ne compte pas lorsque lesdites informations d'émission converties sont enregistrées.

8. Dispositif de télécopie (1) selon la revendication 6 ou 7, dans lequel le moyen de commande (11) force à exécuter une action d'enregistrement une seule fois pour enregistrer les informations d'émission lorsque le moyen de détection d'état de fonctionnement (17) détecte que le tambour photosensible (58) a dépassé sa durée de vie.

9. Dispositif de télécopie selon l'une des revendications 6 à 8, dans lequel il comprend en outre
- un moyen de comparaison de nombre (24) pour comparer un nombre de capacité de copies prédéterminé et le comptage du moyen de comptage (20) et pour délivrer un signal de détection lorsque le comptage dépasse le nombre de capacité de copies,
- un moyen d'horloge (21) pour mesurer le temps d'utilisation depuis le démarrage de l'utilisation dudit tambour photosensible (58),
- un moyen de comparaison de période (26) pour comparer une période utilisable prédéterminée et le temps d'utilisation mesuré par le moyen d'horloge (21) et pour délivrer un signal de détection lorsque le temps d'utilisation dépasse la période utilisable, et
- un moyen (11) pour évaluer que le tambour photosensible (58) a dépassé sa durée de vie lors de la réception d'au moins un signal de détection depuis le moyen de comparaison de nombre (24) et le moyen de comparaison de période (26).
